# EUROPEAN PATENT SPECIFICATION

(11) **EP 1 593 877 B1**
(45) Date of publication and mention of the grant of the patent: **07.11.2007**
(21) Application number: 04010875.5
(22) Date of filing: 07.05.2004
(51) Int. Cl.: F16H 3/093

(54) **Motor vehicle gearbox**
Fahrzeuggetriebe
Transmission d'un véhicule à moteur

(43) Date of publication of application: 09.11.2005
(73) Proprietor: Ford Global Technologies, LLC, Dearborn, MI 48126 (US)
(72) Inventor: Enström, Hans, 443 31 Lerum (SE)
(74) Representative: Hellbom, Lars Olof

(56) References cited:
- EP-A- 0 733 825
- EP-A- 1 077 336
- EP-A- 1 443 245
- WO-A-01/02750
- US-A- 5 906 132

## Description

The present invention relates to a motor vehicle gearbox comprising a housing with an input shaft means and two countershafts lying in a plane offset from the input shaft means and having gear wheels in engagement with gear wheels on the input shaft means for transmitting torque with a number of forward gear speeds, at least one gear wheel of each pair of mutually engaging gear wheels on said input shaft means and said countershafts being disengageable from its shaft, a gear wheel for transmitting torque in reverse being disengageably carried on a fourth shaft, each of said countershafts and said fourth shaft having a gear wheel non-rotatably joined to the shaft for transferring torque to output means, e. g. a crown wheel of a differential.

A gearbox of the above described type is described in US 5 715 727. It has five or six speeds forward and one in reverse. Torque in reverse is transmitted from the input shaft via the first gear speed disengageable gear wheel on one of the countershafts to a reverse speed gear wheel on the fourth shaft. The axial length of such a gearbox can be decreased by journalling also the first gear speed disengageable gear wheel on the forth shaft instead of on one of the countershafts and to transmit torque to this gear wheel from one of the countershaft disengageable gear wheels via a gear wheel on a transfer shaft. A gearbox of this type is described in EP 03025970.9 which is published after the filing of the application. In this gearbox the disengageable gear wheel for third forward gear speed is transferring via the tranfer shaft torque to the first gear speed gear wheel on the fourth shaft while torque in reverse is tranferred via second forward gear speed gear wheel on one of the countershafts to the reverse gear speed gear wheel on the fourth shaft.

EP 1077336 A1 discloses a gearbox having the features of the preamble of claim 1.

When chosing to drive the reverse gear wheel on the fourth shaft from the second gear speed gear wheel on one of the countershafts a rather large diameter reverse gear wheel is required in order to obtain a suitable gear ratio on reverse.

One object of the present invention, starting from the gearbox described in EP 03025971.7 which is published after the filing of the application, is to achieve a gearbox, which can have a smaller reverse gear wheel on the forth shaft and still have a suitable gear ratio and a high final drive torque level..

This is achived according to the invention by virtue of the fact that said gear wheel for transferring torque in reverse on said fourth shaft engages gear wheel means drivingly attached to a disengageable forward gear speed gear wheel on one of the countershafts, said gear wheel means having a smaller diameter than the diameter of said forward gear speed gear wheel.

This gear wheel means can be a separate gear wheel non-rotatably, attached to or made in one piece with for example second gear speed gear wheel on one of the countershafts, thus making the choice of gear ratio in reverse completely independent of the diameter of any disengageable forward gear speed gear wheel.

The invention will be described in more detail below with reference to examples shown in the accompanying drawings, where
Fig. 1 shows a schematic longitudinal section through a first embodiment of a six speed gearbox according to the invention,
Fig. 2 shows a layout of the gear wheels involved to transfer torque when 1^{st}, 2^{nd}, 3^{rd} and reverse is engaged, and
Fig. 3 shows a schematic longitudinal section through a second embodiment of a six speed gearbox according to the invention.

In a gearbox housing generally designated 1 an input shaft 2 means comprising two concentric input shafts 2a and 2b, a first countershaft 3, a second countershaft 4 and a reverse gear shaft 5 are rotatably mounted. Each input shaft 2a, 2b is adapted to be alternately connected to the crankshaft of an engine by means of a clutch (not shown) of its own. The input shaft 2a carries gear wheels 6 and 7 for 5^{th} and 3^{rd} gear speed, respectively, which are non-rotatably fixed to the shaft 2a while the input shaft 2b carries gear wheels 8, 9 and 10 for 4^{th}, 2^{nd} and 6^{th} gear speed, respectively, which are non-rotatably fixed to the shaft 2b.

The gear wheels 6 and 7 on the input shaft 2a engage gear wheels 11 and 12, respectively which are rotatably journalled on the countershaft 4 but can be locked or released in a conventional manner by means of engaging sleeves 13 and 14, respectively, with associated synchronizing means. The gear wheels 8 and 10 on the input shaft 2b engage gear wheels 15 and 16 on the countershaft 3, repectively, while the gear wheel 9 on the input shaft 2b engages a gear wheel 17a on the countershaft 4. All gear wheels 15, 16 and 17a are rotatably journalled on their repective countershafts 3 and 4 but can be locked and released by means of an engaging sleeve 18 and the engaging sleeve 13, respectively.

According to the present invention a gear wheel 17b is rigidly attached to the gear wheel 17a and thus is lockable to and releaseable from the countershaft 4 by means of the engaging sleeve 13. As can be seen the gear wheel 17b has a smaller diameter than the gear wheel 17a and engages a gear wheel 19 which is rotatably journalled and lockable to the reverse shaft 5 by means of an engaging sleeve 20 with associated synchronizing means. By transferring torque in reverse via a gear wheel 17b having a smaller diameter than 2^{nd} gear speed gear wheel 17a a reverse gear wheel 19 having a smaller diameter can be used for a certain gear ratio compared with using the gear wheel 17a for torque transfer in reverse.

A pair of gear wheels 21 and 22 are each non-rotatably fixed to its respective countershaft 3 and 4 and each engages a crown wheel 23 of a differential generally designated 24. A gear wheel 25 is non-rotatably fixed to the reverse shaft 5 and engages the crown wheel 23. Since the gear ratio in reverse is dependent on among other things the diameter of a gear wheel 17b, the diameter of which is not governed by the diameter of any forward speed gear wheel, the diameters of the gear wheels 17b and 19 can be chosen so that a suitable gear ratio is obtained in reverse at the same time as the final drive gear wheel 25 can have the same diameter as the final drive gear wheels 21 and 22 on the countershafts.

A gear wheel 30 is rotatably mounted on the reverse shaft 5. The gear wheel 30 can be locked to the shaft 5 by means of the engaging sleeve 20 and engages a gear wheel 31 which is non-rotatably mounted on a transfer shaft 32 located between the countershaft 4 and the reverse shaft 5. A gear wheel 33 non-rotatably mounted on the transfer shaft 32 engages the gear wheel 12 on the countershaft 4.

In the described gearbox torque is transferred in 3^{rd} and 5^{th} gear speeds from the input shaft 2a via the countershaft 4 and its non-rotatable gear wheel 22 to the crown wheel 23 and in 2^{nd}, 4^{th} and 6^{th} gear speeds from the input shaft 2b via the countershaft 3 and its gear wheel 21 to the crown wheel 23. Which gear wheel engage in respective gear speeds is evident from the figures and in addition to torque tranfer in reverse already described above only torque transfer i 1^{st} will be described in detail.

In 1^{st} gear the gear wheel 30 is locked on the reverse shaft 5 by means of the engaging sleeve 20 and the rest of the disengageable gear wheels are disengaged. The clutch (not shown) of the input shaft is disengaged. Torque is now transferred from the driven input shaft 2a and the gear wheel 7 via 3^{rd} gear speed gear wheel 12, which now serves as an idler, and the gear wheels 33 and 31 on the transfer shaft to the 1^{st} gear speed gear wheel 30. Since the gear wheel 12 will rotate the gear wheel 33 and with it the transfer shaft in a direction opposite the direction of rotation of the gear wheel 12 the gear wheel 31 on the transfer shaft 32 will rotate the 1^{st} gear speed gear wheel 30 and with it the reverse shaft 5 in the same direction as the 3^{rd} gear speed gear wheel 12, thereby transferring torque in 1^{st} forward gear speed via the gear wheel 28 to the crown wheel 24.

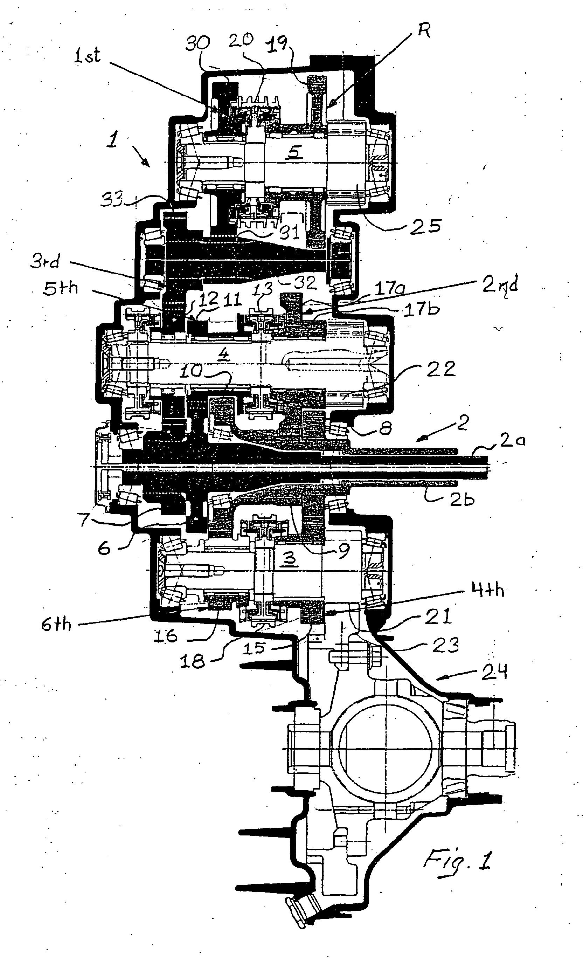

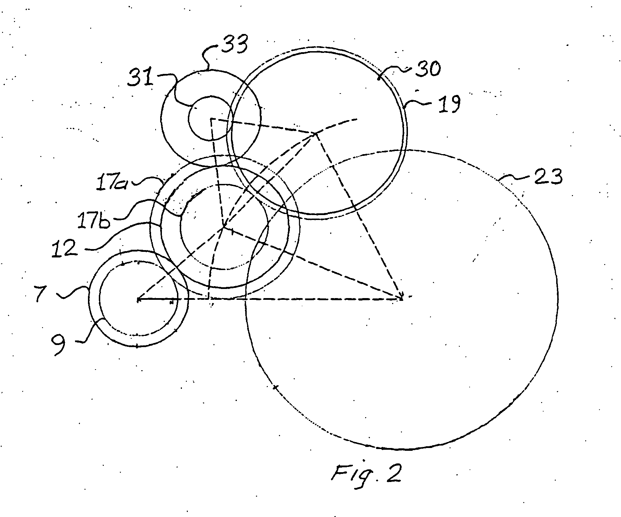

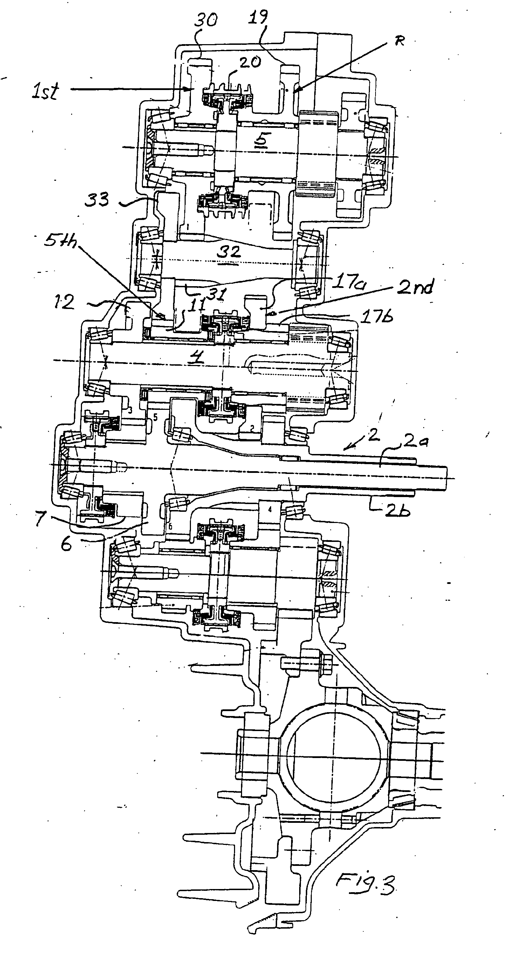

The gearbox shown in Fig. 3 differs from the one discribed above only with respect to the torque transfer in 1^{st} gear. Only gear wheels tranferring torque in 1^{st}, 2^{nd}, 5^{th} and reverse gear has been provided with reference numerals which are the same as the ones shown in Fig. 1. As can be seen in Fig. 3 torque in 1^{st} gear is transferred to the gear wheel 33 on the tranfer shaft 32 from 5^{th} gear speed gear wheel 11 instead of 3^{rd} gear speed gear wheel 12 as shown in Fig. 1 and 2.

## Claims

1. Motor vehicle gearbox comprising a housing (1) with input shaft means (2) and two countershafts (3, 4) lying in a plane offset from the input shaft means and having gear wheels (11,12,15-17) in engagement with gear wheels (6-10) on the input shaft means for transferring torque with a number of forward gear speeds, at least one gear wheel of each pair of mutually engaging gear wheels on said input shaft means and said countershafts being disengageable from its shaft, a gear wheels (19) for transferring torque in reverse being disengagebly carried on a fourth shaft (5), each of said countershafts and said fourth shaft having a gear wheel (21, 22, 25) non-rotatably joined to its shaft for transferring torque to a crown wheel (23) of a differential (24) engaging said gear wheels (21,22,25) non-rotatably joined to the countershafts (3,4) and the fourth shaft (5), said gear wheel (19) for transferring torque in reverse on said fourth shaft (5) engages gear wheel means (17b) drivingly attached to a disengageable forward gear speed gear wheel (17a) on one (4) of the countershafts, said gear wheel means having a smaller diameter than the diameter of said forward gear speed gear wheel and that the input shaft means has at least five gear wheels (6-10) in engagement with gear wheels (11, 12, 15-17) on the countershafts (3, 4) for transferring torque to the crown wheel (23) for forward drive with at least five different gear speeds, **characterized in that** a disengageable gear wheel (11,12) on one of the countershafts is engaging a gear wheel (33) on a transfer shaft (32) for transferring torque in a forward gear speed to a gear wheel (30) on the fourth shaft (5) so as to transfer torque for forward drive with an additional gear speed different from said five different gear speeds.

2. Gearbox according to claim 1, **characterized in that** said gear wheel means (17b) is a gear wheel non-rotatably attached to a forward gear speed gear wheel (17a).

3. Gearbox according to claim 1 or 2, **characterized in that** the disengageable gear wheel (19) on the fourth shaft (5) for transferring torque in reverse engages a gear wheel (17b) attached to a gear wheel (17a) arranged to tranfer torque in 2^{nd} forward gear speed.

4. Gearbox according to one of claims 1-3, **characterized in that** said gear wheels (21,22,25) non-rotatably joined to the countershafts (3, 4) and the fourth shaft (5) have the same diameter.

5. Gearbox according to one of claims 1-4, **characterized in that** the input shaft means (2) comprises a first and a second input shaft (2a, 2b), the second input shaft (2b) being a hollow shaft journalled concentric about the first input shaft (2a).

## Patentansprüche

1. Kraftfahrzeuggetriebe mit einem Gehäuse (1) mit einer Eingangswelleneinrichtung (2) und zwei Gegenwellen (3, 4), die in einer von der Eingangswelleneinrichtung versetzten Ebene liegen und Zahnräder (11, 12, 15-17) aufweisen, die mit Zahnrädern (6-10) an der Eingangswelleneinrichtung in Eingriff sind, zum Übertragen eines Drehmoments mit einer Anzahl von Vorwärtsganggeschwindigkeiten, wobei zumindest ein Zahnrad von jedem Paar wechselseitig eingreifender Zahnräder an der Eingangswelleneinrichtung und den Gegenwellen von seiner Welle lösbar ist, wobei ein Zahnrad (19) zum Übertragen eines Drehmoments im Rückwärtsgang an einer vierten Welle (5) lösbar getragen wird, wobei jede der Gegenwellen und die vierte Welle ein Zahnrad (21, 22, 25) aufweisen, das mit seiner Welle nicht drehbar verbunden ist, zum Übertragen eines Drehmoments an ein Antriebskegelrad (23) eines Differentials (24), das die Zahnräder (21, 22, 25), die nicht drehbar mit den Gegenwellen (3, 4) und der vierten Welle (5) verbunden sind, in Eingriff nimmt, wobei das Zahnrad (19) zum Übertragen eines Drehmoments im Rückwärtsgang an der vierten Welle (5) eine Zahnradeinrichtung (17b) in Eingriff nimmt, die an einem lösbaren Vorwärtsganggeschwindigkeits-Zahnrad (17a) an einer (4) der Gegenwellen antreibend angebracht ist, wobei die Zahnradeinrichtung einen kleineren Durchmesser aufweist als der Durchmesser des Vorwärtsganggeschwindigkeits-Zahnrads und dass die Eingangswelleneinrichtung zumindest fünf Zahnräder (6-10) aufweist, im Eingriff mit den Zahnrädern (11, 12, 15-17) an den Gegenwellen (3, 4), zum Übertragen eines Drehmoments an das Antriebskegelrad (23) zum Vorwärtsantrieb mit zumindest fünf unterschiedlichen Ganggeschwindigkeiten, **dadurch gekennzeichnet, dass** ein lösbares Zahnrad (11, 12) an einer der Gegenwellen ein Zahnrad (33) an einer Übertragungswelle (32), zum Übertragen eines Drehmoments bei einer Vorwärtsganggeschwindigkeit an ein zahnrad (30) an der vierten Welle (5), in Eingriff nimmt, um ein Drehmoment zu übertragen, zum Vorwärtsantrieb mit einer zusätzlichen Ganggeschwindigkeit, die sich von den fünf unterschiedlichen Ganggeschwindigkeiten unterscheidet.

2. Getriebe nach Anspruch 1, **dadurch gekennzeichnet, dass** die Zahnradeinrichtung (17b) ein Zahnrad ist, das nicht drehbar an einem Vorwärtsganggeschwindigkeits-Zahnrad (17a) angebracht ist.

3. Getriebe nach Anspruch 1 oder 2, **dadurch gekennzeichnet, dass** das lösbare Zahnrad (19) an der vierten Welle (5) zum Übertragen eines Drehmoments im Rückwärtsgang ein Zahnrad (17b) in Eingriff nimmt, das an einem Zahnrad (17a) angebracht ist, das angeordnet ist, um ein Drehmoment in einer zweiten Vorwärtsganggeschwindigkeit zu übertragen.

4. Getriebe nach einem der Ansprüche 1 bis 3, **dadurch gekennzeichnet, dass** die Zahnräder (21, 22, 25), die nicht drehbar mit den Gegenwellen (3, 4) und der vierten Welle (5) verbunden sind, den gleichen Durchmesser aufweisen.

5. Getriebe nach einem der Ansprüche 1 bis 4, **dadurch gekennzeichnet, dass** die Eingangswelleneinrichtung (2) eine erste und eine zweite Eingangswelle (2a, 2b) umfasst, wobei die zweite Eingangswelle (2b) eine Hohlwelle ist, die konzentrisch um die erste Eingangswelle (2a) eingesetzt ist.

## Revendications

1. Une boîte de vitesses de véhicule moteur comportant un boîtier (1) avec un moyen d'arbre d'entrée (2) et deux arbres intermédiaires (3, 4) reposant sur un plan décalé par rapport au moyen d'arbre d'entrée et ayant des roues d'engrenage (11, 12, 15-17) en prise avec des roues d'engrenage (6-10) sur le moyen d'arbre d'entrée pour le transfert de couple avec un nombre de vitesses d'engrenage de marche avant, au moins une roue d'engrenage dans chaque paire de roues d'engrenage en prise mutuelle sur ledit moyen d'arbre d'entrée et lesdits arbres intermédiaires étant débrayable de son arbre, une roue d'engrenage (19) pour le transfert de couple en marche arrière étant portée de manière débrayable sur un quatrième arbre (5), chacun desdits arbres intermédiaires et ledit quatrième arbre ayant des roues d'engrenage (21, 22, 25) reliées de manière non rotative à leur arbre pour le transfert de couple à une couronne (23) de différentiel (24) en prise avec lesdites roues d'engrenage (21, 22, 25) reliées de manière non rotative aux arbres intermédiaires (3, 4) sur ledit quatrième arbre (5), ladite roue d'engrenage (19) pour le transfert de couple en marche arrière sur ledit quatrième arbre (5) étant en prise avec le moyen d'engrenage (17b) attaché par entraînement à une roue d'engrenage de vitesse de marche avant débrayable (17a) sur un (4) des arbres intermédiaires, ledit moyen de roue d'engrenage ayant un plus petit diamètre que le diamètre de ladite roue d'engrenage de vitesse de marche avant et le moyen d'arbre d'entrée ayant au moins cinq roues d'engrenage (6-10) en prise avec des roues d'engrenage (11, 12, 15-17) sur les arbres intermédiaires (3-4) pour le transfert de couple à la couronne (23) pour la marche avant avec au moins cinq vitesses différentes d'engrenage, **caractérisé en ce qu'**une roue d'engrenage débrayable (11, 12) sur un des arbres intermédiaires est en prise avec une roue d'engrenage (33) sur un arbre de transfert (32) pour le transfert de couple en une vitesse de marche avant à une roue d'engrenage (30) sur le quatrième arbre (5) afin de transférer un couple pour la marche avant avec une vitesse d'engrenage additionnelle différente desdites cinq vitesses différentes d'engrenage.

2. Une boîte de vitesses selon la revendication 1, **caractérisée en ce que** ledit moyen de roue d'engrenage (17b) est une roue d'engrenage attachée de manière non rotative à une roue d'engrenage de vitesse de marche avant (17a).

3. Une boîte de vitesses selon la revendication 1 ou 2, **caractérisée en ce que** la roue d'engrenage débrayable (19) sur le quatrième arbre (5) pour le transfert de couple en marche marche arrière est en prise avec une roue d'engrenage (17b) attachée à une roue d'engrenage (17a) agencée pour le transfert de couple en 2^{ième} vitesse d'engrenage de marche avant.

4. Une boîte de vitesses selon l'une des revendications 1-3, **caractérisée en ce que** lesdites roues d'engrenage (21, 22, 25) reliées de manière non rotative aux arbres intermédiaires (3, 4) et le quatrième arbre (4) ont le même diamètre.

5. Une boîte de vitesses selon l'une des revendications 1-4, **caractérisée en ce que** le moyen d'arbre d'entrée (2) comporte un premier et un deuxième arbre d'entrée (2a, 2b), le deuxième arbre d'entrée (2b) étant un arbre creux concentrique tourillonné autour du premier arbre d'entrée (2a).
